Europäisches Patentamt

European Patent Office

Office européen des brevets

(19)

(11) Publication number: **0 043 395**
A1

# (12) EUROPEAN PATENT APPLICATION

(21) Application number: **80302297.9**

(22) Date of filing: **04.07.80**

(51) Int. Cl.³: **B 22 F 3/10**

(43) Date of publication of application: **13.01.82**
**Bulletin 82/2**

(71) Applicant: **Adee, James Malcolm, 4277 Layla Way, San Diego California 92154 (US)**
Applicant: **MacPherson, John Andrew, 185 East L Street, Chula Vista California (US)**

(72) Inventor: **Adee, James Malcolm, 4277 Layla Way, San Diego California 92154 (US)**
Inventor: **MacPherson, John Andrew, 185 East L Street, Chula Vista California (US)**

(74) Representative: **Hartley, David et al, c/o Withers & Rogers 4 Dyer's Buildings Holborn, London, EC1N 2JT (GB)**

(84) Designated Contracting States: **AT BE CH DE FR GB IT LI LU NL SE**

(54) Method of forming metal parts with less than 1% carbon content and metal parts made thereby.

(57) Metal parts are formed from a mixture containing a powdered metal, a plasticizer, and two or more binders. At least one of these binder materials are selectively extractable from the mixture without sintering. The mixture is shaped into the form of the desired part and prior to sintering, the plasticizer and the extractable binders are removed. This produces a part having both sufficient green strength and a relatively low binder content. On sintering, the remaining binders decompose; and the resulting part has a carbon content of less than 1.0%.

EP 0 043 395 A1

- 1 -

Method of forming metal parts with less than 1% carbon
content and metal parts made thereby

This invention relates to a method of making metal parts,
especially shaped metal parts having a low carbon content
and to metal parts when made by the said method. Various
attempts have been made to form shaped metal parts by
injection moulding, but this was found not to be suitable
for making metal parts with a carbon content of less than
1.0%.

In comparison, injection moulding works fine and is widely
used to form ceramic parts. Basically, the first step for
forming ceramic parts by injection moulding consists of
forming a mixture of a powdered ceramic, a binder material,
a plasticizer, and an oil. The ceramic is used in a
powdered form because then it can be easily shaped in a
mould; the binder material functions as an adhesive which
holds the particles of the ceramic powder together; the
plasticizer functions to make the mixture more mouldable;
and the lubricant function to provide an easy release of
the part from the mould.

After the powdered ceramic, binder material, plasticizers,
and mould lubricant have been mixed to a substantially
uniform consistency, the mixture is put into a mould of a
predetermined shape. Various injection moulding apparatus
are used to fill the mould. These include for example,
apparatus wherein the mixture is forced through a nozzle by
a plunger into the mould. Other apparatus force the mixture into the mould through a barrel containing a screw which rotates and carries the material into the mould.

Subsequently, the green part is removed from the mould. Then the plasticizer is removed from the green moulded part. Typically, a solvent which attacks the plasticizer, but does not substantially affect the binder material is utilized to accomplish this removal. This leaves the part with sufficient porosity such that when it is sintered the binder material may be driven out.

It is, of course, desirable to form metal parts by a similar method. This is because the method is carried out at temperatures which are substantially less than those required to form metal parts from molten metal. For example, temperatures of less than $300^{o}F$ are typically required. A problem, however, with carrying out the above described steps with metal powder being substituted for the ceramic powder is that the resulting parts exhibit a relatively high carbon content. This occurs because during sintering, the binder material that is in the green part decomposes and combines with the metal powder. In comparison, ceramic materials are relatively inactive; and thus do not combine with the binder as it decomposes.

In order to lower the carbon content of the resulting metal parts, attempts have been made to increase the relative amount of plasticizer material and/or decrease the relative amount of binder material. The problem with this approach however, is that as the ratio of plasticizer material to binder material increases, the viscosity of the mixture decreases; and to produce metal structures with less than 1% carbon content with this process, the viscosity decreases past the point where the moulded part has sufficient green strength to prevent distortion prior to sintering. This problem is most severe when the desired part has a complex shape.

Accordingly, it is one object of the invention to provide an improved method for making parts.

Another object of the invention is to enable manufacture of shaped metal parts having less than 1.0% carbon content by injection moulding. Still another object of the invention is to enable metal parts to be made from a mixture containing at least two substantially different binder materials, some of which can be selectively removed prior to sintering.

These and other objectives of the invention are accomplished by a process wherein a powdered metal, a plasticizer, and at least two binder materials are mixed to a substantially uniform consistency. The binder materials are chosen such that some of them are selectively extractable from any part moulded from the mixture prior to sintering. Suitably, these binder materials may consist of polystyrene and polyethylene.

Subsequently, the mixture is shaped into the desired part, e.g. by injection moulding. After the part is removed from the mould and prior to sintering, the plasticizer and various ones of the extractable binders are removed. Suitably, the binders may be removed by solvent extraction, sublimation, or decomposition. For example, the binder polystyrene may suitably be removed by bathing the part in 1-1-1 trichloroethane.

After the plasticizer and some of the binders have been removed, the part is sintered. During sintering those binders which remain in the part decompose and partially combine with the metal powder. However, since the binder content is reduced prior to sintering, the final part also has a reduced carbon content. Metal parts with less than 0.06% carbon are readily obtained.

- 4 -                                        0043395

According to one aspect of this invention we propose a method of forming a metal part having a carbon content of less than 1% comprised of the steps of:

forming a substantially uniform mixture comprised of a powdered metal, a plasticizer, and two or more binders at least one of which is selectively extractable from the mixture without sintering:

shaping the mixture into the part;

removing the plasticizer and the extractable binder or binders from the part without sintering to form a porous part having a reduced binder content which, when decomposed by sintering, leaves the part with less than the said predetermined carbon content; and

sintering the porous part.

Other features of this invention are set forth in the appended claims.

According to another aspect of this invention we propose a metal part when made by the above method.

Embodiments of the invention will now be described by way of example with reference to the following table which lists the basic steps of a preferred method of forming metal parts of less than 1.0% carbon content.

1.   Form a mixture of:

|   |   | Weight % |
|---|---|---|
| A) | Powdered steel 17-4PH-325 mesh | 85.90 |
| B) | Polystyrene | 6.25 |
| C) | Polyethylene | 0.78 |
| D) | Hunt Wesson Oil | 6.25 |
| E) | Stearic acid | 0.78 |

2.   Injection mould mixture of step 1.

3.   Place moulded part of step 2 in bath of ethyl alcohol to remove plasticizers.

4.   Place moulded part of step 3 in bath of trichloroethane 1,1,1 to remover polystyrene.

5.   Sinter part of step 4.

The method set out in the table utilizes selective removal of binders by solvent extraction to construct metal parts having a low carbon content will be described. This method utilizes a mixture of powdered steel and two binder materials. More specifically, 85.9% of the mixture by weight is the powdered steel 17-4pH-325 mesh; 6.25% of the mixture by weight is the binder polystyrene; and 0.78% of the mixture by weight is the binder polyethylene. Also included in the mixture is Hunt Wesson Oil 101 as a plasticizer; and stearic acid as a mould lubricant.

The above materials are mixed to a uniform consistency at $300^{\circ}F$ in a height shear mixture. Subsequently, the mixture is pelletized, then it is shaped by injection moulding. To illustrate the steps of the disclosed method, standard tensile bars having an average weight of 3.157 grams were formed. A piston type injection moulding machine was used to form these bars. The nozzle temperature and pressure were $340^{\circ}F$ and 4,500 psi respectively; and the barrel temperature was $300^{\circ}F$.

Subsequently, to remove the plasticizer the tensile bars were removed from the mould and placed in a bath of ethyl alcohol at room temperature and for a period of 24 hours. As a result, the average weight loss of the tensile bars was 0.154 grams; or 4.8% of the total part weight.

Removal of the plasticizer opens pores in the moulded part which allows for a subsequent removal of the binder polystyrene. To remove this binder material, the moulded part was placed in the bath of trichloralethylene 1,1,1. This bath was also at room temperature, but lasted only 12 hours. After this, the parts showed an average weight loss of 0.293 grams per sample or 9.3% of the original part weight.

Subsequently, the parts were sintered in a hydrogen atmosphere. The temperature was $2,300^{\circ}F$ and the dew point was -50°F. Total sintering time was six hours; and the heating rate was 8°F per minute. As a result, the sintered parts had a density of 7.34 grams/cm$^3$, or 96% of the theoretical wrought value of 17-4 pH. Tests of the sintered part showed that the carbon content was below 0.06%

As an alternative to the above described method, binder materials can also be selectively removed from the green part by sublimation prior to sintering. This alternative proves also for example, the above described mixture but with the polystyrene replaced by camphor. Using the new mixture, a green part is shaped by injection moulding as described above. Subsequently, the camphor is removed from the green part by subjecting it to a vacuum. This lower pressure causes the camphor to vaporize. A vacuum of 10" of mercury is suitable for this purpose.

As still another alternative, binder materials can be selectively removed by decomposition prior to sintering. This method uses for example, the above described mixture but with polystyrene replaced with beeswax. Again, a green part is shaped by injection moulding. Subsequently, the beeswax is removed from the green part by subjecting it to temperatures that are high enough to cause decomposition of the wax. This occurs at temperatures of approximately 350°F.

- 1 -                              0043395

Claims:

1.   A method of forming a metal part having a carbon
content of less than 1% comprised of the steps of:
     forming a substantially uniform mixture comprised of
a powdered metal, a plasticizer, and two or more binders
at least one of which is selectively extractable from the
mixture without sintering:
     shaping the mixture into the part;
     removing the plasticizer and the extractable binder
or binders from the part without sintering to form a porous
part having a reduced binder content which, when decomposed
by sintering, leaves the part with less than the said
predetermined carbon content; and
     sintering the porous part.

2.   A method according to Claim 1 wherein removal of the
extractable binder or binders is performed by solvent
extraction.

3.   A method according to Claim 1 wherein removal of the
extractable binder or binders is performed by sublimation.

4.   A method according to Claim 1 wherein removal of the
extractable binder or binders is performed by decomposition.

5.   A method according to Claim 2 wherein the mixture
includes polyethylene and polystyrene as binders, and
wherein the part is subjected to a bath in a solvent prior
to sintering to selectively remove the polystyrene therefrom.

6.   A method according to Claim 3 wherein the mixture
includes polyethylene and camphor as binders, and wherein
the part is placed in a vacuum prior to sintering to
selectively remove the camphor therefrom.

7.   A method according to Claim 4 wherein the mixture
includes polyethylene and beeswax as binders, and wherein the part is heated prior to sintering step to selectively remove the beeswax therefrom.

8.    A metal part when made by the method according to any one of claims 1 to 7.

## DOCUMENTS CONSIDERED TO BE RELEVANT

| Category | Citation of document with indication, where appropriate, of relevant passages | Relevant to claim |
|---|---|---|
| X | US - A - 4 197 118 (R.E. WIECH)<br>  * Claims 21-23,44; column 6, lines 31-38; column 7, lines 52-54 * | 1,2,5-8 |
| | GB - A - 808 583 (STANDARD TELE-PHONES AND CABLES LTD.)<br>  * Claims 1,2 * | 1,2 |
| | US - A - 3 859 405 (R.A. HORTON)<br>  * Claim 1 * | 1,3 |
| | US - A - 3 266 893 (J.C. DUDDY)<br>  * Claim 1 * | 1-3 |
| E | DE - A - 3 006 098 (ASAHI GLASS CO.)<br>  * Claim 1 *<br>& GB - A - 2 045 739 | 1,2 |

**CLASSIFICATION OF THE APPLICATION (Int. Cl.3)**

B 22 F 3/10

**TECHNICAL FIELDS SEARCHED (Int. Cl.3)**

B 22 F
C 04 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-03-1981 | SCHRUERS |

EPO Form 1503.1 06.78